Europäisches Patentamt

European Patent Office

Office européen des brevets

(19)

(11) Numéro de publication: **0 155 884**
**B1**

(12) **FASCICULE DE BREVET EUROPEEN**

(45) Date de publication du fascicule du brevet: **13.06.90**

(51) Int. Cl.⁵: **A 01 F 29/00, A 01 D 90/10**

(21) Numéro de dépôt: **85400393.6**

(22) Date de dépôt: **01.03.85**

(54) **Remorque distributeuse de paille ou de fourrage incorporant des moyens de projection a air pulsé.**

(30) Priorité: **02.03.84 FR 8403779**

(43) Date de publication de la demande:
**25.09.85 Bulletin 85/39**

(45) Mention de la délivrance du brevet:
**13.06.90 Bulletin 90/24**

(84) Etats contractants désignés:
**BE CH DE FR GB IT LI LU**

(56) Documents cités:
**DE-A-3 151 517**
**FR-A-1 491 163**
**FR-A-2 450 039**
**FR-A-2 496 571**
**FR-A-2 501 130**
**FR-A-2 509 570**

(73) Titulaire: **Etablissements Maitre S.A.**
**Rongeres**
**F-03150 Jarennes sur Allier (FR)**

(72) Inventeur: **Maitre, Joseph**
**Rongeres**
**F-03150 Varennes Sur Allier (FR)**

(74) Mandataire: **Chanet, Jacques**
**Conseil en Brevets 129 Avenue de Royat B.P. 27**
**F-63400 Chamalières (FR)**

Courier Press, Leamington Spa, England.

## Description

La présente invention est du domaine des machines agricoles et elle a plus particulièrement pour objet un dispositif destiné à débiter des balles, et notamment des balles cylindriques de fourrage ou de paille, pour, par exemple, les répartir aux animaux.

On connaît par la FR—A—2509570 et par la demande de brevet n° 82 04064 au nom du même Demandeur des dispositifs destinés au même usage et l'on pourra avantageusement se reporter aux descriptions de ces demandes pour connaître certains détails de réalisation qui ne seront pas décrits ici. On connait par la FR—A—2450039 un dispositif avec des moyens d'amenée du matériau débouchant dans la conduite de la soufflerie, le matériau étant véhiculé vers l'extérieur par le courant d'air vecteur crée par la soufflerie. On connaît aussi par la FR—A—2 496 571 un dispositif mettant en oeuvre une grande turbine servant à la fois de moyen de soufflage et de moyen d'évacuation; ce dispositif à l'inconvénient de projeter des corps tels que parties de bois et cailloux, se rencontrant assez fréquemment dans la paille ou dans le fourrage, ces projections provoquant une certaine panique chez les animaux qui les reçoivent; ce dispositif est en outre générateur d'une forte poussière projetée sur les animaux.

Selon la présente invention une remorque tractée, semi-tractée ou portée, destinée à transporter et à débiter des balles cylindriques de matières du genre fourrage ou paille, du genre comprenant une caisse de forme sensiblement parallélépipèdique, des moyens de déchiquetage, des moyens de transfert des balles d'une extrémité à l'autre de la remorque pour les amener au contact des moyens de déchiquetage, et un tapis convoyeur évacuateur pour évacuer hors de la remorque la matière déchiquetée, ledit tapis convoyeur étant disposé transversalement au-delà des moyens de déchiquetage par rapport aux moyens de transfert et débouchant sur un côté de la remorque au voisinage d'une extrémité de cette dernière, ledit tapis convoyeur évacuateur étant en outre disposé sensiblement au-dessous du plancher de la remorque est caractérisée d'une manière générale par des moyens de soufflage comportant un orifice de soufflage situé au-dessous de l'extrémité débouchante du tapis convoyeur, la direction de soufflage étant sensiblement perpendiculaire à un côté de la remorque.

De préférence un déflecteur, escamotable et orientable, peut être disposé dans le prolongement de l'orifice de soufflage.

De préférence encore, l'orifice de soufflage est précédé d'un conduit dit de soufflage de section décroissante au fur et à mesure que l'on se rapproche de l'orifice de soufflage.

De préférence encore les moyens de soufflage incorporent une turbine disposée à l'extrémité du conduit de soufflage opposé à l'orifice, ladite turbine étant disposée sensiblement au voisinage de l'autre côté de la remorque.

De préférence encore, la section du conduit de soufflage et l'orifice de soufflage ont la forme d'un rectangle aplati dont la grande dimension, parallèle au tapis est sensiblement plus grande que la largeur de ce dernier.

Le déflecteur a une conformation de gouttière, ou, alternativement, de conduit. Selon que l'on désire épandre de la paille déchiquetée pour former une litière ou, alternativement, dispenser du fourrage dans des auges, on pourra mettre en marche le soufflage ou utiliser le déflecteur ou inversement arrêter le soufflage, retirer le déflecteur et n'utiliser que le tapis convoyeur.

La présente invention sera mieux comprise et des détails en relevant apparaîtront à la description qui va être faite d'une forme particulière de réalisation en relation avec les figures des planches annexées dans lesquelles:

— la fig. 1 est une coupe longitudinale d'une remorque conforme à l'invention, et

— la fig. 2 est une coupe transversale suivant AA de la figure précédente.

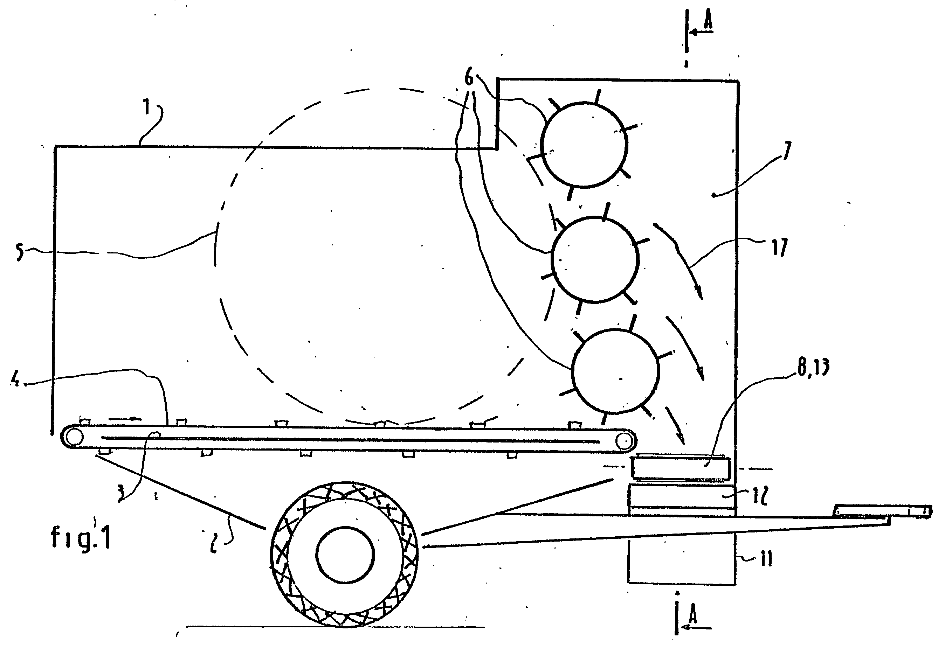

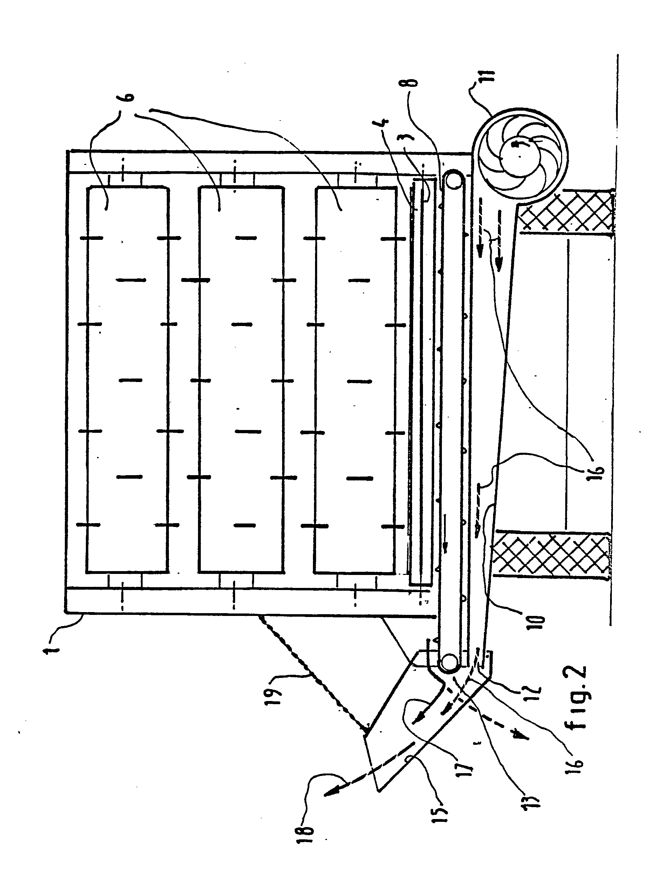

Sur la fig. 1, une remorque distributeuse conforme à l'invention, dans une forme tractée montée sur roues, est essentiellement constituée d'une caisse 1 montée sur un châssis 2, la caisse comportant un plancher 3 autour duquel circule un tapis convoyeur à claires-voies 4 formant moyen de transfert d'une balle telle que 5 pour amener cette dernière au contact de herses rotatives 6 formant moyens de déchiquetage; la matière, paille ou fourrage, déchiquetée est projetée dans une chambre 7 pour finalement tomber sur un tapis convoyeur évacuateur transversal 8. Comme cela apparaît mieux sur la fig. 2, le tapis convoyeur 8 débouche sur un côté de la caisse en débordant assez nettement ce dernier.

Suivant l'invention, des moyens de soufflage sont constitués par un conduit 10 et par une turbine 11, le conduit 10 débouchant par un orifice de soufflage 12 disposé sensiblement au-dessous de l'extrémité débouchante 13 du tapis convoyeur évacuateur transversal 8. Il apparaît bien que le conduit 10 a une largeur sensiblement supérieure à la largeur de la remorque et qu'il a une section décroissante depuis la turbine 11 jusqu'à l'orifice de soufflage 12, cette section, comme l'orifice 12, ayant une section rectangulaire; il résulte de cette disposition que la vitesse de l'air pulsé par la turbine s'accroit au fur et à mesure que l'on se rapproche de l'orifice de soufflage 12.

Un déflecteur 15, en forme de gouttière ou alternativement de conduit, est disposé de façon articulée et escamotable dans le prolongement du conduit 10 et du tapis 8.

Le fonctionnement du dispositif de l'invention est le suivant: la matière déchiquetée tombant (flèche 17) sur le convoyeur transversal 8 est amenée à l'extrémité débouchante 13 de celui-ci; dans le cas où de l'air est pulsé par la turbine (flèche 16), la matière déchiquetée rencontre ce courant d'air qui est lui-même dévié par le déflecteur 15, pour être projetée de bas en haut (flèche 18).

2

Dans le cas où on ne souhaite pas utiliser cette projection par air pulsé, il suffit d'enlever ou d'abaisser le déflecteur 15 suspendu par une chaine ou tirant 19 et de découpler l'entraînement de la turbine 11.

Grâce à la disposition de l'invention, on évite, lorsqu'on utilise la remorque distributeuse pour projeter de la paille déchiquetée, de projeter des corps lourds tels que cailloux; en effet ceux-ci sont suffisamment denses pour ne pas être entraînés par le courant d'air à la sortie de l'orifice 8; de plus les poussières formées par le déchiquetage restent en grande partie flottantes dans la chambre 17 et ne sont pas non plus évacuées dans la salle d'élevage.

Bien que l'on ait décrit et représenté une forme particulière de réalisation d'une remorque distributeuse conforme à l'invention, il doit être compris que la portée de cette dernière n'est pas limitée à cette forme mais qu'elle s'étend à tout dispositif de distribution de matières du genre paille ou fourrage comportant les caractéristiques telles que définies dans les revendications.

## Revendications

1. Remorque tractée, semi-tractée ou portée, destinée à transporter et à débiter des balles cylindriques (5) de matières du genre fourrage ou paille, du genre comprenant une caisse (1) de forme sensiblement parallélépipèdique, des moyens de déchiquetage (6), des moyens de transfert des balles (4) d'une extrémité à l'autre de la remorque pour les amener au contact des moyens de déchiquetage (6), et un tapis convoyeur évacuateur (8) pour évacuer hors de la remorque la matière déchiquetée, ledit tapis convoyeur évacuateur (8) étant disposé transversalement au-dela des moyens de déchiquetage (6) par rapport aux moyens de transfert (4) et débouchant sur un côté de la remorque au voisinage d'une extrémité de cette dernière, ledit tapis convoyeur evacuateur (8) étant en outre disposé sensiblement au-dessous du plancher (3) de la remorque, caractérisée:

par des moyens de soufflage (10, 11, 12) comportant un orifice de soufflage (12) situé au-dessous de l'extrémité débouchante (13) du tapis convoyeur évacuateur (8), la direction de soufflage étant sensiblement perpendiculaire à un côté de la remorque;

2. Remorque selon la revendication 1, caractérisée:

par un déflecteur (15), escamotable et orientable, pouvant être disposé dans le prolongement de l'orifice de soufflage (12);

3. Remorque selon la revendication 1, caractérisée:

en ce que l'orifice de soufflage (12) est précédé d'un conduit (10) dit de soufflage de section décroissante au fur et à mesure que l'on se rapproche de l'orifice de soufflage (12);

4. Remorque selon la revendication 3, caractérisée:

en ce que les moyens de soufflage incorporent une turbine (11) disposée à l'extrémité du conduit de soufflage (10) opposé à l'orifice de soufflage (12), ladite turbine (11) étant disposée sensiblement au voisinage de l'autre côté de la remorque;

5. Remorque selon la revendication 4, caractérisée:

en ce que la section du conduit de soufflage (10) et l'orifice de soufflage (12) ont la forme d'un rectangle aplati dont la grande dimension, parallèle au tapis est sensiblement plus grande que la largeur de ce dernier;

6. Remorque selon la revendication 5, caractérisée:

en ce que le déflecteur (15) à une conformation de gouttière;

7. Remorque selon la revendication 5, caractérisée:

en ce que le déflecteur (15) à une conformation de conduit.

## Patentansprüche

1. Anhänger zum Ziehen oder für Sattelschlepper oder zum Aufsetzen, vorgesehen zum Transportieren und Abgeben von zylindrischen Ballen (5) aus Futtermaterial oder Stroh, mit einem Kasten (1) von im wesentlichen parallelepipedischer Gestalt, mit Mitteln (6) zum Zerreißen, mit Mitteln (4) zum Transportieren von Ballen von einem Ende des Hängers zum anderen, um sie mit den Mitteln (6) zum Zerreißen in Berührung zu bringen, mit einem Auswurfförderband (8), das zerrissenes Material aus dem Hänger herausfördert, das ferner in Bezug auf die Mittel (4) zum Überführen quer und jenseits der Mittel (6) zum Zerreißen angeordnet ist und an einer Seite des Hängers im Bereich eines von dessen Enden mündet und außerdem unter anderem im wesentlichen unterhalb des Bodens (3) des Hängers angeordnet ist, gekennzeichnet durch Mittel (10, 11, 12) zum Blasen, umfassend eine Blasöffnung (12), die unter dem Mündungsende (13) des Auswurfförderbandes (8) angeordnet ist, wobei die Blasrichtung im wesentlichen senkrecht zu einer Hängerseite verläuft.

2. Anhänger nach Anspruch 1, gekennzeichnet durch einen einziehbaren und ausrichtbaren Deflektor (15), der in der Verlängerung der Blasöffnung (12) angeordnet ist.

3. Anhänger nach Anspruch 1, dadurch gekennzeichnet, daß der Blasöffnung (12) eine sogenannte Blasleitung (10) vorgeschaltet ist, deren Querschnitt in dem Maße abnimmt, als sie sich der Blasöffnung (12) annähert.

4. Anhänger nach Anspruch 3, dadurch gekennzeichnet, daß die Blasmittel eine Turbine (11) enthalten, die am Ende der Blasleitung (10) und der Blasöffnung (12) gegenüberliegend angeordnet ist, und daß die Turbine (11) im wesentlichen im Bereich der anderen Seite des Anhängers angeordnet ist.

5. Anhänger nach Anspruch 4, dadurch gekennzeichnet, daß der Querschnitt der Blasleitung (10) und der Blasöffnung (12) im wesentlichen die Gestalt eines abgeflachten Rechtecks aufweisen, dessen große, zum Förderband parallele Abmessung deutlich größer als die Breite des Rechteckes ist.

6. Anhänger nach Anspruch 5, dadurch gekennzeichnet, daß der Deflektor (15) die Gestalt einer Ablaufrinne hat.

7. Anhänger nach Anspruch 5, dadurch gekennzeichnet, daß der Deflektor (15) die Gestalt einer Leitung hat.

**Claims**

1. Towed, semi-towed or mounted trailer intended to transport and to cut up cylindrical bales (5) of materials of the fodder or straw kind, of the kind comprising a case (1) of substantially parallelepipedal shape, shredding means (6), means for transferring the bales (4) from one end to the other of the trailer so as to bring them into contact with the shredding means (6), and a discharging conveyor belt (8) for discharging the shredded material outside the trailer, the said discharging conveyor belt (8) being arranged transversely beyond the shredding means (6) relative to the transfer means (4) and emerging on one side of the trailer in the vicinity of one end of the latter, the said discharging conveyor belt (8) being arranged moreover substantially underneath the floor (3) of the trailer, characterized by blowing means (10, 11, 12) comprising a blowing orifice (12) situated underneath the emerging end (13) of the discharging conveyor belt (8), the blowing direction being substantially perpendicular to one side of the trailer;

2. Trailer according to Claim 1, characterized by a rectractable and directable deflector (15) which can be arranged in the extension of the blowing orifice (12).

3. Trailer according to Claim 1, characterized in that the blowing orifice (12) is preceded by a so-called blowing duct (10) with a cross-section decreasing progressively in the direction of the blowing orifice (12).

4. Trailer according to Claim 3, characterized in that the blowing means incorporate a turbine (11) arranged at the end of the blowing duct (10) opposite the blowing orifice (12), the said turbine (11) being arranged substantially in the vicinity of the other side of the trailer;

5. Trailer according to Claim 4, characterized in that the cross-section of the blowing duct (10) and the blowing orifice (12) have the shape of a flattened rectangle, the large dimension of which, parallel to the belt, is substantially greater than the width of the latter.

6. Trailer according to Claim 5, characterized in that the deflector (15) has a gutter shape.

7. Trailer according to Claim 5, characterized in that the deflector (15) has a duct shape.

fig.1

fig.2